# FASCICULE DE BREVET EUROPEEN

(11) **EP 1 785 312 B1**
(45) Date de publication et mention de la délivrance du brevet: **24.02.2010**
(21) Numéro de dépôt: 06301125.8
(22) Date de dépôt: 07.11.2006
(51) Int. Cl.: B60N 2/64, B60N 2/02

(54) **Siège comportant un dossier**
Sitz mit Rückenlehne
Seat having a backrest

(30) Priorité: 15.11.2005 FR 0553458
(43) Date de publication de la demande: 16.05.2007
(73) Titulaire: Peugeot Citroën Automobiles, 78140 Velizy Villacoublay (FR)
(72) Inventeur: Fomperine, Stéphan, 94470 Boissy Saint Leger (FR)
(74) Mandataire: Couillard, Yann Luc Raymond

(56) Documents cités:
- EP-A- 0 704 339
- EP-A- 1 142 751
- DE-A1- 10 028 717
- DE-A1- 19 649 587
- JP-A- 2003 252 095
- US-A- 4 728 149

## Description

L'invention se rapporte à un siège comportant un dossier et plus particulièrement un siège d'appoint du type mince.

La modularité de l'habitacle d'un véhicule automobile a évolué avec l'avènement des monospaces. Ils permettent désormais dans un véhicule compact de proposer jusqu'au sept sièges sur trois rangées. La troisième rangée est souvent constituée de deux sièges du type mince. Ce type de siège permet un escamotage dans le plancher de coffre par des cinématiques permettant de prendre un minimum de place. La nécessité de l'escamotage dans le plancher oblige à concevoir des sièges très minces qui sont très inconfortables par leur manque de profondeur et insupportable pour un adulte sur un long trajet.

Le siège du document DE 100 28 717, qui est considéré comme l'état de l'art le plus proche, montre un dossier notamment pour siège comportant une garniture et une chape montés respectivement sur chaque face d'une structure et un système de déplacement d'une partie mobile de la garniture par rapport à la chape permettant d'augmenter localement l'épaisseur globale dudit dossier.

Le but de la présente invention est de pallier tout ou partie les inconvénients cités précédemment en proposant un dossier dont l'épaisseur est variable.

A cet effet, l'invention se rapporte à un siège (1) notamment pour véhicule automobile comportant un dossier (5) et une assise (3) escamotables l'un contre l'autre, ledit dossier (5)] comportant une garniture (7), une chape (11) montées respectivement sur chaque face d'une structure (9) et un système de déplacement (23) d'une partie mobile (29) de la chape (11) par rapport à la garniture (7) permettant d'augmenter localement l'épaisseur globale dudit dossier, ledit système de déplacement (23) comportant un dispositif d'articulation (25) monté entre la structure (9) et la partie mobile (29) de la chapé (11) pour permettre l'indépendance du mouvement de déplacement de la partie mobile (29) par rapport à l'escamotage du dossier (5), **caractérisé en ce que** le dispositif d'articulation (25) comporte deux biellettes (35, 37) montées pivotantes par rapport à la structure (9) et comportant chacune un perçage formant une lumière (45, 47) et une traverse (39) sensiblement en forme de U dont la base est solidaire de la partie mobile (29) de la chape (11) et dont les extrémités comportent chacun un pivot (51, 53) destiné à glisser dans une desdites lumières pour permettre le déplacement relatif de la partie mobile (29) de la chape (11) par rapport à la structure (9).

Conformément à d'autres caractéristiques avantageuses de l'invention :
- les lumières sont sensiblement en forme de L pour offrir une position d'équilibre du système de déplacement lorsque la partie mobile de la chape est éloignée au maximum de la structure, cette position d'équilibre correspondant en fait à une position verrouillée ;
- les deux biellettes sont montés pivotantes par rapport à la structure par l'intermédiaire chacune d'un flasque sensiblement en forme d'équerre ;
- le système de déplacement comporte un deuxième dispositif d'articulation monté entre la structure et la partie mobile de la chape pour guider selon une rotation la partie mobile de la chape lors du déplacement du premier dispositif d'articulation ;
- le système de déplacement comporte un dispositif d'actionnement comportant des moyens élastiques permettant en position d'équilibre d'éloigner la partie mobile de la chape par rapport à la structure ;
- le dispositif d'actionnement comporte un moyen de préhension permettant de rapprocher la partie mobile de la chape par rapport à la structure et de contraindre lesdits moyens élastiques ;
- la chape comporte une partie fixe montée partiellement sur la garniture sensiblement sur la partie haute du dossier et sensiblement partiellement contre la partie mobile afin de les protéger ;
- la chape comporte une second partie mobile solidaire de la première et comprenant un axe de rotation sur sensiblement la partie basse dudit dossier pour éviter l'arc-boutement de la première partie mobile avec un objet à proximité.

D'autres particularités et avantages ressortiront clairement de la description qui en est faite ci-après, à titre indicatif et nullement limitatif, en référence aux dessins annexés, dans lesquelles :
- la figure 1 et la figure 2 représentent un siège dont le système de déplacement du dossier selon l'invention est respectivement dans son état non activé et activé ;
- la figure 3 est une vue éclatée d'un dossier selon l'invention ;

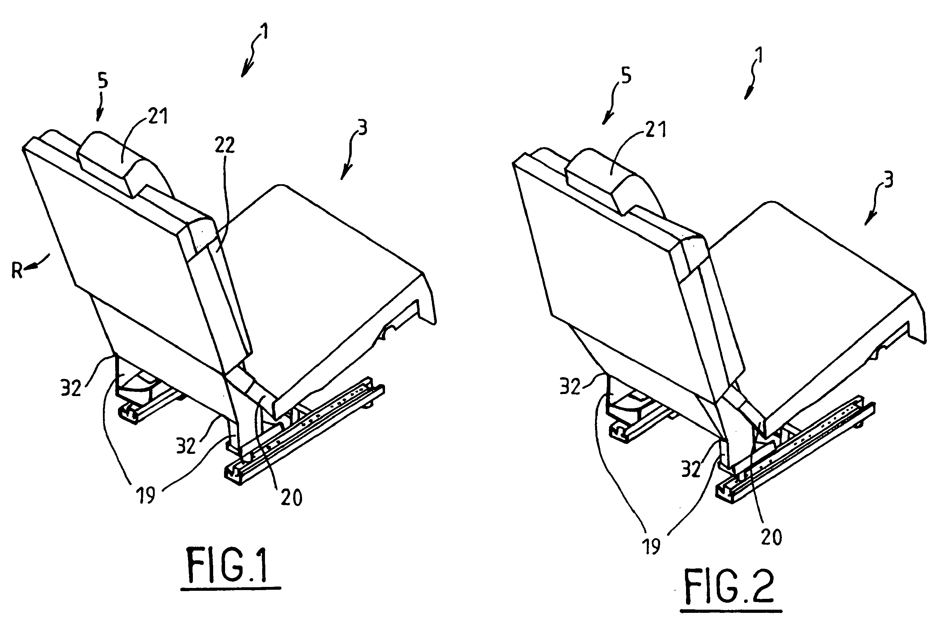

- la figure 1 est une vue partielle du dossier dont le système de déplacement est activé ;

La garniture 7, généralement réalisée en un matériau polymère souple, est fixée sur une face du cadre 13 de la structure 9 que l'on considérera ci-après comme la face avant. La chape 11 formée préférentiellement d'un matériau rigide est, par conséquent, montée sur la face arrière du cadre 13 de la structure 9. Elle recouvre partiellement les côtés 22 de la garniture 7 pour protéger la structure 9 et éviter les arcs-boutements de la garniture 7 lors du pliage du siège 1.

Selon l'invention, le dossier 5 comporte également un système de déplacement 23 permettant de faire varier l'épaisseur globale du dossier 5. Le système de déplacement 23 comporte principalement un premier 25 et deuxième 27 dispositifs d'articulation d'une partie mobile 29 de la chape 11.

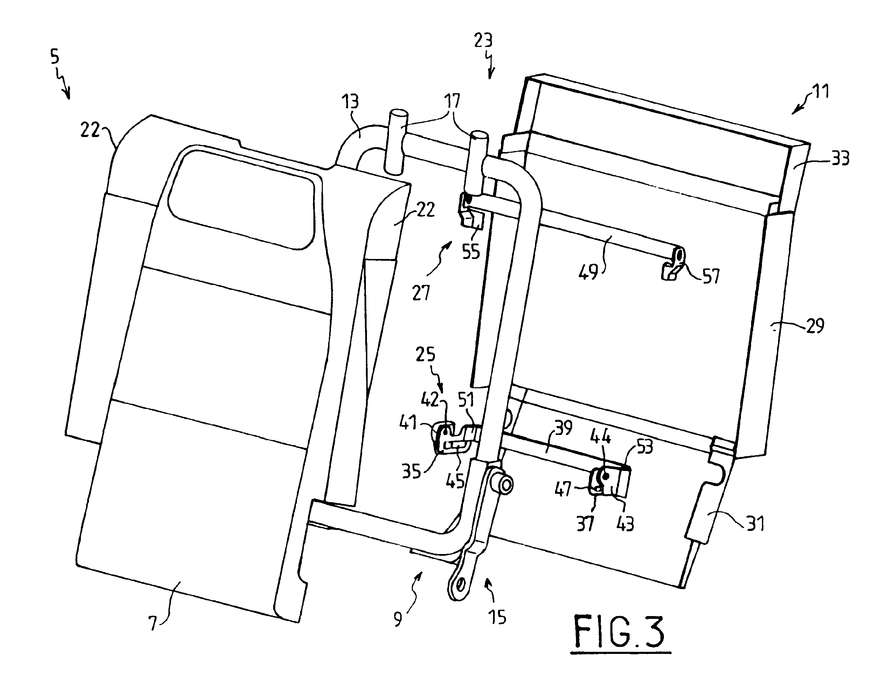

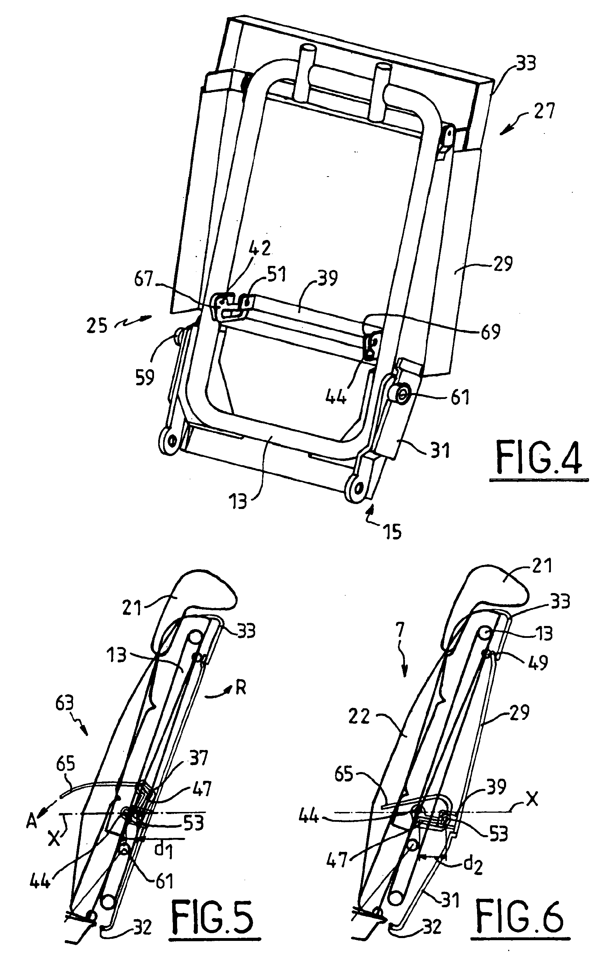

Dans l'exemple illustré aux figures 3 et 4, on peut voir que le premier dispositif d'articulation 25 comporte principalement deux biellettes 35 et 37 et une traverse 39. Le dispositif d'articulation 25 est monté entre la partie mobile 29 de la chape 11 et le cadre 13 de la structure 9.

Préférentiellement, les biellettes 35 et 37 sont montées pivotantes par rapport à la structure 9 par l'intermédiaire respectivement de flasques 41 et 43. Comme visible à la figure 3, le flasque 43 (symétrique au flasque 41) forme sensiblement une équerre dont une partie comporte le pivot 44 (symétrique au pivot 42) de la biellette 37 et dont l'autre partie, orthogonale à la première, est utilisée comme fixation sur sensiblement la partie basse du cadre 13 comme, par exemple, par soudage ou collage.

Les biellettes 35 et 37 sont sensiblement chacune en forme de U dont une extrémité est utilisée pour recevoir le pivot 42 et 44 de son flasque 41 et 43 associé et dont la partie restante comporte un évidement formant une lumière respectivement annotée 45 et 47. Préférentiellement, les biellettes 35 et 37 sont identiques et montés à l'intérieur du cadre 13 de la structure 9. De plus de manière préférée, les lumières 45 et 47 sont en forme de L.

Comme visible aux figures 3 et 4, la traverse 39 est de forme sensiblement en U dont la base est solidaire de la partie mobile 29 de la chape 11 et dont les extrémités comportent chacun un pivot 51 et 53 destiné à glisser dans respectivement les lumières 45 et 47 des biellettes 35 et 37.
Préférentiellement, la traverse 39 est fixée sur la partie basse de la partie mobile 29, par exemple, par collage, clippage ou collage. Alternativement, une pièce rotative (non représentée) peut être montée de manière distale sur les pivots 51 et 53 afin de faciliter le glissement relatif des pivots 51 et 53 dans les lumières 45 et 47.

Préférentiellement et comme illustré dans l'exemple des figures 3 et 4, le système de déplacement 23 comporte un deuxième dispositif d'articulation 27 monté entre le cadre 13 de la structure 9 et la partie mobile 29 de la chape 11 pour guider selon une rotation R la partie mobile 29 de la chape 11 lors du déplacement du premier dispositif d'articulation 25. De la même façon que le dispositif d'articulation 25, le dispositif d'articulation 27 comporte une traverse 49 qui est montée sensiblement sur la partie haute de la partie mobile 29, par exemple, par collage, clippage ou collage. Préférentiellement, la traverse 49 est montée pivotante par rapport à la structure 9 par l'intermédiaire de flasques 55 et 57. Les flasques 55 et 57 sont, par exemple, fixés par collage ou par collage contre l'extérieur du cadre 13 de la structure 9.

Préférentiellement, la chape 11 comporte également une deuxième partie mobile 31 et une partie fixe 33. La partie fixe 33 de la chape 11 est montée sensiblement sur la partie haute du dossier 5. A la manière de la partie mobile 29, elle recouvre partiellement les côtés 22 de la garniture 7 mais également partiellement le haut de la partie mobile 29. Cette configuration est notamment utile pour laisser suffisamment de liberté aux mouvements du haut de la partie mobile 29 mais également pour intégrer un moyen de préhension comme, par exemple, une palette de commande afin de replier le siège 1.

De manière préférée, la deuxième partie mobile 31 est solidaire dans sa partie haute de sensiblement la partie basse de la première partie mobile 29 et est montée dans sa partie basse sur un pivot 32 fixé entre les ancrages 19. A la manière de la partie mobile 29 et de la partie fixe 33, elle recouvre partiellement les côtés 22 de la garniture 7 mais également, comme visible à la figure 4, partiellement les pivots 59 et 61 des moyens de fixations 15. Les pivots 59 et 61 sont solidaires des bras 20 (visibles aux figures 1 et 2) de l'assise 3 afin d'escamoter du siège 1 en guidant le mouvement du dossier 5 par rapport à l'assise 3.

La deuxième partie mobile 31 permet d'éviter l'arc-boutement de la première partie mobile 29 avec un objet qui serait à proximité lors du déplacement du siège 1 mais également de protéger le bas du cadre 13 et les moyens de fixation 15 de la structure 9. De manière préférée, la hauteur et/ou la largeur de la deuxième partie mobile 31 sont sensiblement inférieure(s) à celles de la première partie mobile 29.

Le dispositif d'actionnement 63 du système de déplacement 23 va maintenant être expliqué. Il est utilisé pour passer de la position escamotée de la chape 11 comme visible aux figures 1 et 5 à sa position déployée comme visible aux figures 2 et 6. Préférentiellement, le dispositif d'actionnement 63 est configuré pour se déployer « automatiquement », c'est-à-dire que le mouvement de déploiement de la chape 11 est assisté. Il comporte principalement un moyen de préhension 65 (référencé aux figures 5 et 6) et des moyens élastiques 67 et 69 (référencés à la figure 4).

Le moyen de préhension 65 peut être, par exemple, une sangle souple ou une manette tirant un organe souple. Il est relié à l'extrémité d'une ou des deux biellettes 35 et 37 comme illustré à la figure 5 et à la figure 6. Les moyens élastiques 67, 69 sont montés coaxialement aux pivots 42, 44 qui relient les flasques 41, 43 aux biellettes 35, 37. Cette configuration est utilisée afin que les moyens élastiques 67 et 69 soient sensiblement continuellement sous contrainte, c'est-à-dire dans un état continuellement comprimé. Préférentiellement, les moyens élastiques 67 et 69 sont au minimum de leur contrainte lorsque quand les biellettes 35 et 37 sont dans leur position illustrée à la figure 6, c'est-à-dire lorsque le système de déplacement 23 de la partie mobile 29 est déployé.

Le fonctionnement du système de déplacement 23 va maintenant être expliqué. La position d'équilibre du système de déplacement est celle des figures 2 et 6. Dans cette position, l'épaisseur du dossier 5 est maximale ce qui permet à la personne assise de pouvoir déformer la garniture 7 sans rencontrer de point dur comme, par exemple, la chape 11. Cette position permet donc d'obtenir un siège 1 du type mince qui soit confortable. La position d'équilibre est obtenue par la force exercée par les moyens élastiques 67 et 69 mais également par la géométrie de lumière qui, en position de visible à la figure 6, empêche tout mouvement rectilignes (sensiblement le long de l'axe X) des pivots 51 et 53 vers les pivots 42 et 44 (cela correspond donc à une position verrouillée).

Pour passer de la position d'équilibre, dite déployée, à la position escamotée, il faut utiliser le dispositif d'actionnement 63. Dans l'exemple illustré aux figures 5 et 6, il suffit de tirer, dans la direction A, le moyen de préhension 65. Le déplacement est alors transmis à une ou aux deux biellettes 35 et 37. Les biellettes 35 et 37 ont comme unique degré de liberté la rotation par rapport aux flasques 41 et 43 qui est imposée conjointement par le dispositif d'articulation 25. La rotation induite est utilisée pour passer d'une position sensiblement horizontale des biellettes 35 et 37 vers une position sensiblement verticale selon un angle trigonométrique essentiellement droit.

La rotation des biellettes 35 et 37 oblige notamment par gravité, les pivots 51 et 53 à glisser le long des lumières 45 et 47 jusqu'à ce qu'ils butent contre l'extrémité desdites lumières. La rotation a pour conséquence de diminuer la distance, le long sensiblement de l'axe X, des pivots 51 et 53 de la traverse 39 par rapport au pivot 42 et 44 des biellettes 35 et 37 de d₂ vers d₁. Cette rotation est également utilisée pour comprimer d'avantage les moyens élastiques 67 et 69 ce qui permettra d'assister le prochain mouvement de déploiement du système de déplacement 23.

Par voie de conséquence, la partie mobile 29 de la chape 11 qui est fixée sur traverse 39 est également entraînée par la rotation des biellettes 35 et 37. Grâce au deuxième dispositif d'articulation 27 la partie mobile est guidée selon la rotation « -R ». Enfin, la deuxième partie mobile 31 de la chape 11, qui est solidaire dans sa partie haute à la partie mobile 29, est aussi déplacée. Elle imprime, par réaction au déplacement de la pièce mobile 29, une rotation autour du pivot 32.

Le système de déplacement 23 se trouve alors, comme visible aux figures 1 et 5, dans son état escamoté. Le siège 1 est alors dans sa configuration du type mince, c'est-à-dire que son dossier 5 possède une épaisseur minimale.

Préférentiellement, le dispositif d'actionnement 63 comporte un dispositif de blocage (non représenté) apte à limiter le retour des biellettes 35 et 37 par détente des moyens élastiques 67 et 69. Le dispositif de blocage peut consister en un crochet présent sur une ou les deux lumières 45 et 47 qui, destiné à former un rétrécissement, bloque, une fois passé, les mouvements des pivots 51 et 53.

Pour repasser le système de déplacement 23 à son état déployé ou d'équilibre, il suffit de libérer le dispositif de blocage et ainsi permettre aux moyens élastiques 67 et 69 de se détendre pour entraîner les biellettes 35 et 37 de leur position sensiblement verticale vers leur position sensiblement horizontale. Les parties mobiles 29 et 31 se retrouvent, à l'inverse de ce qui a été expliqué ci-dessus, déplacées vers la position des figures 2 et 6 par glissement des pivots 51 et 53 le long des lumières 45 et 47.

Bien entendu, la présente invention ne se limite pas à l'exemple illustré mais est susceptible de diverses variantes et modifications qui apparaîtront à l'homme de l'art. En particulier, la position d'équilibre peut être celle escamotée. Il peut également être envisager d'autres dispositif de blocage comme consister en un ensemble du type attache (par exemple un ensemble boucle - agrafe) monté sur le moyen de préhension 65 ou comme un dispositif de blocage du type comprenant des masses fixées sur la partie mobile 29 de la chape 11 qui, lorsque le dossier 5 pivote vers l'assise 3 sensiblement d'au moins 45°, obligent, par gravité, la partie mobile 29 à s'escamoter.

Il est bien évidemment possible de modifier le dispositif d'actionnement 63 afin de passer entre la position déployée et la position escamotée. Il peut ainsi être prévu d'avoir une commande d'actionnement 63 dont le moyen de préhension 65 est lié à l'assise 3. Cela permet alors de faire pivoter les biellettes 35 et 37 en exerçant un effort par tension du moyen de préhension 65 induite quand le siège 1 s'escamote. Le moyen de préhension 65 reste donc tendu ce qui assure le blocage en position escamotée du dossier 5 sans dispositif de blocage.

Enfin, il est également envisageable d'avoir une commande d'actionnement 63 de la chape 11, par une liaison « rigide », c'est-à-dire par une ou plusieurs biellettes reliées à l'assise 3. De cette manière lorsque le siège 1 est escamoté, ces biellettes empêchent la chape 11 de se déployer.

## Revendications

1. Siège (1) notamment pour véhicule automobile comportant un dossier (5) et une assise (3) escamotables l'un contre l'autre, ledit dossier (5)] comportant une garniture (7), une chape (11) montées respectivement sur chaque face d'une structure (9) et un système de déplacement (23) d'une partie mobile (29) de la chape (11) par rapport à la garniture (7) permettant d'augmenter localement l'épaisseur globale dudit dossier, ledit système de déplacement (23) comportant un dispositif d'articulation (25) monté entre la structure (9) et la partie mobile (29) de la chape (11) pour permettre l'indépendance du mouvement de déplacement de la partie mobile (29) par rapport à l'escamotage du dossier (5), **caractérisé en ce que** le dispositif d'articulation (25) comporte deux biellettes (35, 37) montées pivotantes par rapport à la structure (9) et comportant chacune un perçage formant une lumière (45, 47) et une traverse (39) sensiblement en forme de U dont la base est solidaire de la partie mobile (29) de la chape (11) et dont les extrémités comportent chacun un pivot (51, 53) destiné à glisser dans une desdites lumières pour permettre le déplacement relatif de la partie mobile (29) de la chape (11) par rapport à la structure (9).

2. Siège (1) selon la revendication 1, **caractérisé en ce que** les lumières (45, 47) sont sensiblement en forme de L pour offrir une position d'équilibre du système de déplacement (23) lorsque la partie mobile (29) de la chape (11) est éloignée au maximum de la structure (9).

3. Siège (1) selon la revendication 1 ou 2, **caractérisé en ce que** les deux biellettes (35, 37) sont montés pivotantes par rapport à la structure (9) par l'intermédiaire chacune d'un flasque (41, 43) sensiblement en forme d'équerre.

4. Siège (1) selon l'une des revendications 1 à 3, **caractérisé en ce que** le système de déplacement (23) comporte un deuxième dispositif d'articulation (27) monté entre la structure (9) et la partie mobile (29) de la chape (11) pour guider selon une rotation (R) la partie mobile (29) de la chape (11) lors du déplacement du premier dispositif d'articulation (25).

5. Siège (1) selon l'une des revendications précédentes, **caractérisé en ce que** le système de déplacement (23) comporte un dispositif d'actionnement (63) comportant des moyens élastiques (67, 69) permettant en position d'équilibre d'éloigner la partie mobile (29) de la chape (11) par rapport à la structure (9).

6. Siège (1) selon la revendication 5, **caractérisé en ce que** le dispositif d'actionnement (63) comporte un moyen de préhension (65) permettant de rapprocher la partie mobile de la chape (11) par rapport à la structure (9) et de contraindre lesdits moyens élastiques.

7. Siège (1) selon l'une des revendications précédentes, **caractérisé en ce que** la chape (11) comporte une partie fixe (33) montée partiellement sur la garniture (7) sensiblement sur la partie haute du dossier (5) et sensiblement partiellement contre la partie mobile (29) afin de les protéger.

8. Siège (1) selon l'une des revendications précédentes, **caractérisé en ce que** la chape (11) comporte une second partie mobile (31) solidaire de la première (29) et comprenant un axe de rotation sur sensiblement la partie basse dudit dossier (5) pour éviter l'arc-boutement de la première partie mobile (29) avec un objet à proximité.

## Claims

1. A seat unit (1) in particular for an automobile, comprising a backrest (5) and a seat (3) which are retractable one against the other, the said backrest (5) comprising a fitting (7), a clevis (11) mounted respectively on each face of a structure (9) and a displacement system (23) of a mobile part (29) of the clevis (11) with respect to the fitting (7), allowing the total thickness of the said backrest to be increased locally, the said displacement system (23) comprising an articulation device (25) mounted between the structure (9) and the mobile part (29) of the clevis (11) to allow the independence of the displacement movement of the mobile part (29) with respect to the retraction of the backrest (5), **characterized in that** the articulation device (25) comprises two links (35, 37) mounted so as to be pivoting with respect to the structure (9) and each comprising a bore forming a port (45, 47) and a substantially U-shaped crosspiece (39), the base of which is integral with the mobile part (29) of the clevis (11) and the ends of which each comprise a pivot (51, 53) intended to slide in one of the said ports to allow the relative displacement of the mobile part (29) of the clevis (11) with respect to the structure (9).

2. The seat unit (1) according to Claim 1, **characterized in that** the ports (45, 47) are substantially L-shaped to offer a position of equilibrium of the displacement system (23) when the mobile part (29) of the clevis (11) is at a maximum distance from the structure (9).

3. The seat unit (1) according to Claim 1 or 2, **characterized in that** the two links (35,37) are mounted so as to be pivoting with respect to the structure (9) each by means of a side-piece (41, 43) substantially in the form of an angle bracket.

4. The seat unit (1) according to one of Claims 1 to 3, **characterized in that** the displacement system (23) comprises a second articulation device (27) mounted between the structure (9) and the mobile part (29) of the clevis (11) to guide, according to a rotation (R), the mobile part (29) of the clevis (11) on the displacement of the first articulation device (25).

5. The seat unit (1) according to one of the preceding claims, **characterized in that** the displacement system (23) comprises an actuating device (63) comprising elastic means (67, 69) allowing, in a position of equilibrium, the mobile part (29) of the clevis (11) to be moved away with respect to the structure (9).

6. The seat unit (1) according to Claim 7, **characterized in that** the actuating device (63) comprises a gripping means (65) allowing the mobile part of the clevis (11) to be brought close with respect to the structure (9) and to stress the said elastic means.

7. The seat unit (1) according to one of the preceding claims, **characterized in that** the clevis (11) comprises a fixed part (33) mounted partially on the fitting (7) substantially on the upper part of the backrest (5) and substantially partially against the mobile part (29) so as to protect them.

8. The seat unit (1) according to one of the preceding claims, **characterized in that** the clevis (11) comprises a second mobile part (31), integral with the first (29) and comprising a rotation axis on substantially the lower part of the said backrest (5) to prevent the arching of the first mobile part (29) with a close object.

## Patentansprüche

1. Sitz (1), insbesondere für ein Kraftfahrzeug, der eine Rückenlehne (5) und eine Sitzfläche (3), die gegeneinander klappbar sind, aufweist, wobei die Rückenlehne (5) eine Polsterung (7) und eine Gabel (11) aufweist, die jeweils auf jeder Seite einer Struktur (9) montiert sind, und ein System zum Verlagern (23) eines beweglichen Teils (29) der Gabel (11) in Bezug zu der Polsterung (7), das es erlaubt, die globale Stärke der Rückenlehne lokal zu steigern, wobei das Verlagerungssystem (23) eine Anlenkvorrichtung (25) aufweist, die zwischen die Struktur (9) und den beweglichen Teil (29) der Gabel (11) montiert ist, um die Unabhängigkeit der Verlagerungsbewegung des beweglichen Teils (29) in Bezug auf das Zurückklappen der Rückenlehne (5) zu erlauben, **dadurch gekennzeichnet, dass** die Anlenkvorrichtung (25) zwei Schwenkarme (35, 37) aufweist, die in Bezug zu der Struktur (9) schwenkend montiert sind und jeweils eine Bohrung aufweisen, die ein Langloch (45, 47) bildet, und einen Querbalken (39) im Wesentlichen in U-Form, dessen Basis fest mit dem beweglichen Teil (29) der Gabel (11) verbunden ist, und dessen Enden jeweils einen Zapfen (51, 53) aufweisen, der dazu bestimmt ist, in einem der Langlöcher zu gleiten, um das relative Verlagern des beweglichen Teils (29) der Gabel (11) in Bezug zu der Struktur (9) zu erlauben.

2. Sitz (1) nach Anspruch 1, **dadurch gekennzeichnet, dass** die Langlöcher (45, 47) im Wesentlichen L-Form haben, um eine Gleichgewichtsposition des Verschiebungssystems (23) zu erlauben, wenn der bewegliche Teil (29) der Gabel (11) maximal von der Struktur (9) entfernt ist.

3. Sitz (1) nach Anspruch 1 oder 2, **dadurch gekennzeichnet, dass** die zwei Schwingarme (35, 37) in Bezug zu der Struktur (9) über jeweils einen Flansch (41, 43) mit im Wesentlichen Winkelform schwenkend montiert sind.

4. Sitz (1) nach einem der Ansprüche 1 bis 3, **dadurch gekennzeichnet, dass** das Verlagerungssystem (23) eine zweite Anlenkvorrichtung (27) aufweist, die zwischen die Struktur (9) und den beweglichen Teil (29) der Gabel (11) montiert ist, um den beweglichen Teil (29) der Gabel (11) beim Verlagern der ersten Anlenkvorrichtung (25) entlang einer Drehung (R) zu führen.

5. Sitz (1) nach einem der vorhergehenden Ansprüche, **dadurch gekennzeichnet, dass** das Verlagerungssystem (23) eine Betätigungsvorrichtung (63) aufweist, die elastische Mittel (67, 69) aufweist, die es in Gleichgewichtsposition erlauben, den beweglichen Teil (29) von der Gabel (11) in Bezug zu der Struktur (9) zu entfernen.

6. Sitz (1) nach Anspruch 7, **dadurch gekennzeichnet, dass** die Betätigungsvorrichtung (63) ein Greifmittel (65) aufweist, das es erlaubt, den beweglichen Teil der Gabel (11) in Bezug zu der Struktur (9) anzunähern und die elastischen Mittel zu beanspruchen.

7. Sitz (1) nach einem der vorhergehenden Ansprüche, **dadurch gekennzeichnet, dass** die Gabel (11) einen stationären Teil (33) aufweist, der teilweise auf die Polsterung (7) im Wesentlichen auf dem oberen Teil der Rückenlehne (5) und im Wesentlichen teilweise gegen den beweglichen Teil (29) montiert ist, um sie zu schützen.

8. Sitz (1) nach einem der vorhergehenden Ansprüche, **dadurch gekennzeichnet, dass** die Gabel (11) einen zweiten beweglichen Teil (31) aufweist, der fest mit dem ersten (29) verbunden ist und eine Rotationsachse auf im Wesentlichen dem unteren Teil der Rückenlehne (5) aufweist, um ein Abstemmen des ersten beweglichen Teils (29) mit einem Objekt in der Nähe zu vermeiden.
